# EUROPÄISCHE PATENTSCHRIFT

(11) **EP 0 675 587 B1**
(45) Veröffentlichungstag und Bekanntmachung des Hinweises auf die Patenterteilung: **13.10.1999**
(21) Anmeldenummer: 95103382.8
(22) Anmeldetag: 09.03.1995
(51) Int. Cl.: H02M 3/156, H05B 41/29

(54) **Getakteter Spannungswandler**
Switched voltage converter
Convertisseur de tension commuté

(30) Priorität: 28.03.1994 DE 4410738
(43) Veröffentlichungstag der Anmeldung: 04.10.1995
(73) Patentinhaber: ROBERT BOSCH GMBH, 70442 Stuttgart (DE)
(72) Erfinder: Schlienz, Ulrich, Dipl.-Ing., D-72805 Lichtenstein (DE); Hartz, Albert, Dipl.-Ing., D-76287 Rheinstetten (DE)

(56) Entgegenhaltungen:
- DE-A- 3 312 108
- GB-A- 2 102 641
- US-A- 4 595 865

## Beschreibung

### Stand der Technik

Die Erfindung geht aus von einem getakteten Spannungswandler nach der Gattung des Hauptanspruchs. Aus dem US-Patent 4 595 865 ist es bekannt, eine Stromregelung eines durch einen induktiven Verbraucher fließenden Stroms in Abhängigkeit von dem durch einen Leistungsschalter fließenden Strom vorzunehmen. Es liegt ein selbstschwingender Betriebszustand vor, der einem selbstschwingenden getakteten Betrieb eines Spannungswandlers entspricht. Als Maß für den Strom wird der am Leistungsschalter auftretende Spannungsabfall gewertet, der über eine Entkopplungsdiode einem Komparator zugeführt wird. Der Ausgang des Komparators schaltet über eine weitere Entkopplungsdiode den Leistungsschalter.

Der Erfindung liegt die Aufgabe zugrunde, einen getakteten Spannungswandler anzugeben, der eine einfache Schaltung zum Bereitstellen eines Taktsignals aufweist.

Die Aufgabe wird durch die im Hauptanspruch angegebenen Merkmale gelöst.

### Vorteile der Erfindung

Der erfindungsgemäße Spannungswandler weist den Vorteil auf, daß in der Schaltung zur Bereitstellung des für den wenigstens einen Leistungsschalter vorgesehenen Taktsignals nur wenige einfache elektronische Bauteile eingesetzt werden. Der erfindungsgemäße Spannungswandler kann deshalb kostengünstig realisiert werden. Ein weiterer Vorteil ist die geringe Fläche, die die wenigen elektronischen Bauteile benötigen.

Erfindungsgemäß ist vorgesehen, wenigstens ein Parameter des dem Leistungsschalter zugeführten Taktsignals in Abhängigkeit von dem durch den Leistungsschalter fließenden Strom festzulegen, der indirekt erfaßt wird durch Auswertung des an einer Schaltstrecke des Leistungsschalters auftretenden Spannungsabfalls. Vorgesehen ist eine Entkopplung über wenigstens eine Entkopplungsdiode, die zwischen der Schaltstrecke und der weiteren Schaltung liegt, die eine Widerstands-Kondensator-Kombination und einen Komparator zur Auswertung des Spannungsabfalls enthält. Die Widerstands-Kondensator-Kombination ist zwischen dem Steuereingang des Leistungsschalter und ein Bezugspotential geschaltet.

Die Entkopplungsdioden sind mit dem Kondensator der Widerstands-Kondensator-Kombination derart verbindbar, daß die Kondensatorspannung die Entkopplungsdioden und den Komparator steuert.

Vorteilhafte Weiterbildungen und Ausgestaltungen des erfindungsgemäßen Spannungswandlers ergeben sich aus abhängigen Ansprüchen.

Eine vorteilhafte Ausgestaltung sieht vor, daß als Parameter die Frequenz und/oder das Tastverhältnis des Taktsignals vorgesehen sind.

Eine andere Weiterbildung sieht vor, daß der Parameter in Abhängigkeit von einem vorgegebenen Maximalwert des Stroms festgelegt ist.

Eine besonders vorteilhafte Ausgestaltung sieht vor, daß die Entkopplung über die wenigstens eine Entkopplungsdiode von dem Taktsignal derart gesteuert ist, daß bei einem Taktsignal, das einem Durchschalten des Leistungsschalters entspricht, die Entkopplung aufgehoben und bei einem Taktsignal, das dem Sperren des Leistungsschalters entspricht, die Entkopplung aktiviert ist.

Eine zweckmäßige Ausgestaltung sieht vor, daß durch die Festlegung der Werte der Widerstands-Kondensator-Kombination die Ausschaltzeit des Leistungsschalters festgelegt ist.

Der erfindungsgemäße getaktete Spannungswandler wird bevorzugt als einfacher Sperrwandler realisiert. Der geringe Bauteileaufwand in der Ansteuerung sowie die wenigen Bauteile zur Realisierung eines Sperrwandlers, beispielsweise eines Sperrwandlers ohne Potentialtrennung, ergeben insgesamt einen geringen Aufwand. Der erfindungsgemäße getaktete Spannungswandler ist deshalb insbesondere für Serienerzeugnisse geeignet. Eine bevorzugte Anwendung ist in einem Vorschaltgerät für Gasentladungslampen gegeben, die in Kraftfahrzeugen eingebaut werden.

Weitere vorteilhafte Weiterbildungen und Ausgestaltungen ergeben sich aus der folgenden Beschreibung.

### Zeichnung

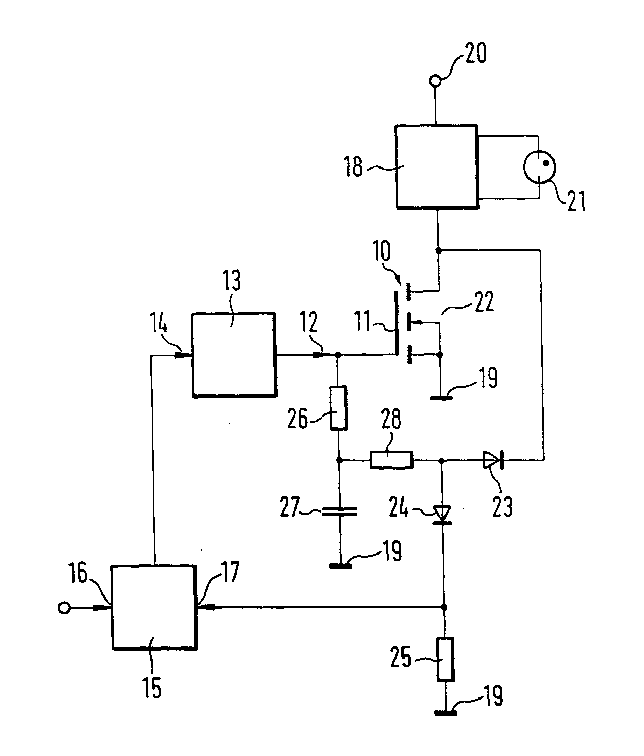

In der Figur ist ein Blockschaltbild eines erfindungsgemäßen Spannungswandlers gezeigt.

Der erfindungsgemäße Spannungswandler enthält wenigstens einen Leistungsschalter 10, dessem Steuereingang 11 ein Taktsignal 12 zugeführt ist. Das Taktsignal 12 wird von einer Treiberschaltung 13 abgegeben, die ein Eingangssignal 14 erhält, das von einem Komparator 15 bereitgestellt wird. Der Komparator weist einen Referenzeingang 16 und einen Vergleichseingang 17 auf.

Der Leistungsschalter 10 verbindet eine Leistungsschaltung 18 in Abhängigkeit vom Taktsignal 12 mit einer Schaltungsmasse 19. Die Leistungsschaltung 18 ist an einem Stromversorgungsanschluß 20 angeschlossen, der zu einer nicht näher gezeigten Energiequelle führt. Die Leistungsschaltung 18 stellt für eine Gasentladungslampe 21 geeignete Spannungen und Ströme bereit.

Zwischen der Leistungsschaltung 18 und der Schaltungsmasse 19 liegt eine Schaltstrecke 22 des Leistungsschalters 10. Eine an der Schaltstrecke 22 liegende Spannung ist über eine erste Entkopplungsdiode 23 und eine zweite Entkopplungsdiode 24 dem Vergleichseingang 17 des Komparators 15 zugeführt. Zwischen der zweiten Entkopplungsdiode 24 und der Schaltungsmasse 19 ist ein Arbeitswiderstand 25 geschaltet.

Der Steuereingang 11 des Leistungsschalters 10 ist über eine Reihenschaltung aus einem ersten Widerstand 26 und einem Kondensator 27 mit der Schaltungsmasse 19 verbunden. Der erste Widerstand 26 und der Kondensator 27 sind über einen zweiten Widerstand 28 mit einem Schaltungspunkt verbunden, an dem die beiden Entkopplungsdioden 23, 24 angeschlossen sind.

Der erfindungsgemäße Spannungswandler arbeitet folgendermaßen:

Der Spannungswandler enthält wenigstens den einen in der Figur gezeigten Leistungsschalter 10, der beispielsweise ein Bipolartransistor oder vorzugsweise ein Feldeffekttransistor ist. Der Leistungsschalter 10 ist vorzugsweise in der Leistungsschaltung 18 enthalten, welche die von einer nicht näher gezeigten Energiequelle bereitgestellte Energie in eine für einen Verbraucher geeignete Energieversorgung umformt. Die Umformung betrifft gleichermaßen eine Strom- wie auch eine Spannungsumformung. Als Verbraucher ist in der Figur beispielsweise die Gasentladungslampe 21 gezeigt, die als ein besonders kritischer Verbraucher zu sehen ist.

Wesentlich ist es, daß das Taktsignal 12 wenigstens in Abhängigkeit von dem durch den Leistungsschalter 10 fließenden Strom festgelegt ist. Für die Festlegung kann ein geeigneter Parameter des Taktsignals 12 vorgesehen sein. Vorzugsweise handelt es sich bei dem Taktsignal 12 um ein digitales Signal, wobei dessen Frequenz und/oder dessen Tastverhältnis festzulegen ist. Prinzipiell ist es möglich, einen zumindest näherungsweise linearen Zusammenhang zwischen dem Strom und dem ausgewählten Parameter des Taktsignals 12 festzulegen. Anstelle eines linearen Zusammenhangs kann auch ein beliebig anderer funktionaler Zusammenhang vorgesehen sein. Eine besonders zweckmäßige Ausgestaltung sieht vor, einen Parameter des Taktsignals 12 in Abhängigkeit von einem vorgegebenen Maximalwert des durch den Leistungsschalter 10 fließenden Stroms festzulegen.

Der durch den Leistungsschalter 10 fließende Strom kann als ein Maß für die der Gasentladungslampe 21 zugeführte Leistung oder auch für den Strom oder die zur Verfügung gestellte Spannung angesehen werden. Eine Erfassung einer dieser Größen unmittelbar am Verbraucher, beispielsweise an der Gasentladungslampe 21 muß deshalb nicht vorgesehen sein. Ein Sollwert für wenigstens eine dieser Größen wird durch einen geeigneten Wert vorgegeben, der dem Referenzeingang 16 des Komparators 15 zugeleitet ist. Falls eine kontinuierliche Beeinflussung des Taktsignals 12 in Abhängigkeit von dem durch den Leistungsschalter 10 fließenden Strom vorgesehen ist, wird anstelle des Komparators 15 ein Bauteil eingesetzt, das einen vorgegebenen funktionellen Zusammenhang zwischen dem am Vergleichseingang 17 liegenden Wert und dem Eingangssignal 14 für die Treiberschaltung 13 bereitstellt. Im gezeigten Ausführungsbeispiel ist der Komparator 15 vorgesehen, der den am Referenzeingang 16 liegenden Wert mit dem am Vergleichseingang 17 liegenden Wert vergleicht. Der am Vergleichseingang 17 liegende Wert entspricht dem Strom, der durch den Leistungsschalter 10 fließt.

Prinzipiell ist es möglich, einen Strom durch einen separaten Stromsensor, beispielsweise einem ohmschen Widerstand oder einem Magnetfeldsensor zu erfassen. Gemäß einer vorteilhaften Ausgestaltung ist die Fassung des Stroms über den Spannungsabfall an der Schaltstrecke 22 des Leistungsschalters 10 vorgesehen. Der Spannungsabfall gelangt über die Entkopplungsdioden 23, 24 an den Vergleichseingang 17. Vorausgesetzt wird zunächst, daß der Leistungsschalter 10 im eingeschalteten Zustand ist. Weiterhin wird angenommen, daß der Leistungsschalter ein Feldeffekttransistor ist. Der Steuereingang 11 des Leistungsschalters 10 entspricht dann einem Gate-Anschluß. Bei positiver Gate-Spannung sind bei der in der Figur eingezeichneten Anordnung der Dioden 23, 24, wobei die beiden Anodenanschlüsse der Dioden 23, 24 miteinander verbunden sind, die beiden Dioden 23, 24 leitend und die Serienschaltung mit der zweiten Entkopplungsdiode 24 und dem Arbeitswiderstand 25 liegt parallel zur Serienschaltung aus der ersten Entkopplungsdiode 23 und dem Innenwiderstand der Schaltstrecke 22. Dadurch ist der Spannungsabfall am Arbeitswiderstand 25 gleich dem Spannungsabfall an der Schaltstrecke 22. Bei einer Gate-Spannung von 0 Volt sperrt die erste Entkopplungsdiode 23 und verhindert ein Verfälschen des Signals am Arbeitswiderstand 25. Außerdem schützt die erste Entkopplungsdiode 23 die weitere Schaltung vor hohen Spannungsspitzen, die beim Abschalten des Leistungsschalters 10 auftreten könnten.

Hat die Spannung am Arbeitswiderstand 25 einen niedrigeren Pegel als eine am Referenzeingang 16 liegende Referenzspannung, dann gibt der Komparator 15 das Eingangssignal 14 an die Treiberschaltung 13 ab, die das Taktsignal 12 auf einen positiven Wert festlegt, der geeignet ist, den Leistungsschalter 10 vollständig durchzusteuern. Gleichzeitig wird über den ersten Widerstand 26 der Kondensator 27 geladen. Die maximale Ladespannung ergibt sich aus dem Spannungspegel des Taktsignals und einem Spannungsteiler, der aus dem ersten Widerstand 26, dem zweiten Widerstand 28, der zweiten Entkopplungsdiode 24 und dem Arbeitswiderstand 25 gebildet wird. Ein geeigneter Wert ist beispielsweise 75 % der für die Durchsteuerung des Leistungsschalters 10 erforderlichen Spannung am Steuereingang 11.

Nach dem Einschalten des Leistungsschalters 10 fließt ein Strom über die Schaltstrecke 22, dessen Anstieg im allgemeinen von einem nicht näher gezeigten, in der Leistungsschaltung 18 enthaltenen induktiven Element auf maximale Werte begrenzt ist. Der vom fließenden Strom verursachte Spannungsabfall an der Schaltstrecke liegt am Vergleichseingang 17. Überschreitet der Pegel am Vergleichseingang 17 den Pegel am Referenzeingang 16, dann wird über das Eingangssignal 14 die Treiberschaltung 13 abgeschaltet und das Taktsignal 12 fällt auf beispielsweise Null Volt. Der Leistungsschalter 10 sperrt. In diesem Fall bewirkt der Kondensator 27 über den zweiten Widerstand 28 und über die zweite Entkopplungsdiode 24 eine Anhebung des Pegels am Vergleichseingang 17. Die Begrenzung der Signalpegel auf vergleichsweise geringe Werte, die denen der Restspannung bei durchgeschalteter Schaltstrecke 22 entsprechen, ist aufgehoben durch das Sperren der ersten Entkopplungsdiode 23. Der Pegel springt auf einen Wert, der vom zweiten Widerstand 28 und vom Arbeitswiderstand 25 festgelegt ist, die als Spannungsteiler wirken, wobei die Spannung am Kondensator 27 zuvor auf etwa 75 % der Gate-Spannung festgelegt wurde. Mit dieser Maßnahme bleibt der Leistungsschalter 10 sicher gesperrt.

Eine weitere Funktion des Kondensators 27 liegt in der Vorgabe einer konstanten Abschaltzeit des Leistungsschalters 10. Der Kondensator entlädt sich nach dem Abschalten über den ersten Widerstand 26 sowie über die Reihenschaltung aus dem ersten Widerstand 28, der zweiten Entkopplungsdiode 24 und dem Arbeitswiderstand 25. Die Spannung am Vergleichseingang 17 des Komparators 15 sinkt exponentiell ab bis die am Referenzeingang 16 liegende Referenzspannung unterschritten wird. Erst dann wird ein erneutes Einschalten des Leistungsschalters 10 möglich. Die konstante Abschaltzeit wird im wesentlichen vom ersten Widerstand 26 und vom Kondensator 27 bestimmt. Die Festlegung der konstanten Abschaltzeit weist den Vorteil auf, daß die Erhöhung der Leistungsanforderung des Verbrauchers mit einer Frequenzerhöhung verbunden ist, da sich die Einschaltzeit verkürzt.

Der Komparator 15 kann beispielsweise als integrierte Schaltung realisiert sein, wobei vorzugsweise eine integrierte Schaltung zum Einsatz kommt, die mehr als einen Komparator enthält. Besonders geringe Abmessungen der integrierten Schaltung ergeben sich, wenn zwei Komparatoren enthalten sind, die in einer integrierten Schaltung mit nur acht Anschlüssen unterzubringen sind. Der weitere Komparator kann beispielsweise zum Überwachen einer Ausgangsspannung oder einer anderen Signalspannung vorgesehen sein. Weiterhin kann eine Abschaltfunktion ohne zusätzlichen Aufwand realisiert werden, die ein Abschalten des Spannungswandlers bei einem aufgetretenen Fehler bewirkt.

Die Treiberschaltung 13 enthält beispielsweise Transistoren, die als Stromverstärker geschaltet sind. Solche Stromverstärker ermöglichen ein schnelles Umladen einer Gatekapazität eines gegebenenfalls als Leistungsschalter 10 eingesetzten MOS-Feldeffekttransistors.

## Patentansprüche

1. Getakteter spannungswandler, der wenigstens einen Leistungsschalter (10) enthält, dessem Steuereingang (11) ein Taktsignal (12) zugeführt ist, wobei wenigstens ein Parameter des Taktsignals (12) wenigstens in Abhängigkeit von dem durch den Leistungsschalter (10) fließenden Strom festgelegt ist, der indirekt erfaßt wird durch Auswertung des an einer Schaltstrecke (22) des Leistungsschalters (10) auftretenden Spannungsabfalls und wobei eine Entkopplung über wenigstens eine Entkopplungsdiode (23, 24) zwischen der Schaltstrecke und der weiteren Schaltung, die eine Widerstands-Kondensator-Kombination (26, 27) und einen Komparator (17) zur Auswertung des Spannungsabfalls enthält, vorgesehen ist, dadurch gekennzeichnet, daß die Widerstands-Kondensator-Kombination (26, 27), zwischen Steuereingang (11) und Bezugspotential geschaltet ist und die Entkopplungsdioden (23, 24) mit dem Kondensator (27) verbindbar sind, so daß die Kondensatorspannung die Entkopplungsdioden (23, 24) und den Komparator (17) steuert.

2. Spannungswandler nach Anspruch 1, dadurch gekennzeichnet, daß als Parameter die Frequenz und/oder das Tastverhältnis des Taktsignals (12) vorgesehen sind.

3. Spannungswandler nach Anspruch 1, dadurch gekennzeichnet, daß der Parameter in Abhängigkeit von einem vorgegebenen Maximalwert des Stroms festgelegt ist.

4. Spannungswandler nach Anspruch 1, dadurch gekennzeichnet, daß die Entkopplung über die wenigstens eine Entkopplungsdiode (23, 24) von dem Taktsignal (12) gesteuert ist, derart, daß bei einem Taktsignal, das einem Durchschalten des Leistungsschalters (10) entspricht, die Entkopplung aufgehoben und bei einem Taktsignal (12), das dem Sperren des Leistungsschalters (10) entspricht, die Entkopplung aktiviert ist.

5. Spannungswandler nach Anspruch 1, dadurch gekennzeichnet, daß durch die Festlegung der Werte der Widerstands-Kondensator-Kombination (26, 27) die Ausschaltzeit des Leistungsschalters (10) festgelegt ist.

6. Spannungswandler nach Anspruch 1, gekennzeichnet durch die Verwendung bei einem vorschaltgerät für Gasentladungslampen, insbesondere solche, die in Kraftfahrzeugen eingebaut sind.

## Claims

1. Switched-mode voltage converter which contains at least one power switch (10) whose control input (11) is supplied with a clock signal (12), in which case at least one parameter of the clock signal (12) is defined at least as a function of the current flowing through the power switch (10), which current is detected indirectly by evaluating the voltage drop that occurs across a switching path (22) of the power switch (10), and in which case decoupling is provided via at least one decoupling diode (23, 24) between the switching path and the further circuit, which contains a resistor/capacitor combination (26, 27) and a comparator (17) for evaluating the voltage drop, characterized in that the resistor/capacitor combination (26, 27) is connected between the control input (11) and a reference-earth potential, and the decoupling diodes (23, 24) can be connected to the capacitor (27) such that the capacitor voltage controls the decoupling diodes (23, 24) and the comparator (17).

2. Voltage converter according to Claim 1, characterized in that the frequency and/or duty ratio of the clock signal (12) are provided as parameters.

3. Voltage converter according to Claim 1, characterized in that the parameter is defined as a function of a predetermined maximum value of the current.

4. Voltage converter according to Claim 1, characterized in that the decoupling is controlled by the clock signal (12) via the at least one decoupling diode (23, 24), in such a manner that the decoupling is cancelled by a clock signal which corresponds to the power switch (10) being switched on, and the decoupling is activated by a clock signal (12) which corresponds to the power switch (10) being switched off.

5. Voltage converter according to Claim 1, characterized in that the switch-off time of the power switch (10) is governed by the definition of the values of the resistor/capacitor combination (26, 27).

6. Voltage converter according to Claim 1, characterized by use in a ballast for gas-discharge lamps, in particular those which are fitted in motor vehicles.

## Revendications

1. Transformateur de tension synchronisé qui contient au moins un commutateur de puissance (10), dont l'entrée de commande (11) est amenée à un signal de synchronisation (12), au moins un paramètre du signal de synchronisation (12) étant déterminé au moins en fonction de l'intensité qui passe à travers de commutateur de puissance (10), intensité qui est indirectement détectée en évaluant la chute de tension qui se produit sur un trajet de commande (22) du commutateur de puissance (10) et un découplage étant prévu par l'intermédiaire d'au moins une diode de découplage (23, 24) placée entre le trajet de commande et la suite du circuit qui contient une combinaison se composant d'une résistance et d'un condensateur (26, 27) et un comparateur (17) qui sert à évaluer la chute de tension,
caractérisé en ce que
• la combinaison qui se compose d'une résistance et d'un condensateur (26, 27)est branchée entre l'entrée de commande (11) et le potentiel de référence et
• les diodes de découplage (23, 24) peuvent être reliées au condensateur (27) de telle sorte que la tension du condensateur commande les diodes de découplage (23, 24) et le comparateur (17).

2. Transformateur de tension, selon la revendication 1,
caractérisé en ce qu'
on prévoit comme paramètre la fréquence et/ou le taux d'impulsions du signal de synchronisation (12).

3. Transformateur de tension, selon la revendication 1,
caractérisé en ce que
le paramètre est fixé en fonction d'une valeur maximale prédéfinie du courant.

4. Transformateur de tension, selon la revendication 1,
caractérisé en ce que
le découplage est commandé au moyen d'au moins une diode de découplage (23, 24) par le signal de synchronisation (12) d'une manière telle que dans le cas d'un signal de synchronisation qui correspond à un branchement complet du commutateur de puissance (10), le découplage est supprimé et dans le cas d'un signal de synchronisation (12) qui correspond au blocage du commutateur de puissance (10), le découplage est activé.

5. Transformateur de tension, selon la revendication 1,
caractérisé en ce qu'
on détermine le temps de débranchement du commutateur de puissance (10) en fixant les valeurs de la combinaison qui se compose d'une résistance et d'un condensateur (26, 27).

6. Transformateur de tension, selon la revendication 1,
caractérisé par
son utilisation dans le cas d'un appareil de commande préalable pour lampes à décharge de gaz, en particulier pour celles que l'on monte dans les véhicules à moteur.
